# EUROPÄISCHE PATENTSCHRIFT

(11) **EP 0 564 682 B1**
(45) Veröffentlichungstag und Bekanntmachung des Hinweises auf die Patenterteilung: **26.10.1994**
(21) Anmeldenummer: 92106132.1
(22) Anmeldetag: 09.04.1992
(51) Int. Cl.: G01F 1/78, G01F 1/66, G01F 1/84

(54) **Schwingkörperanordnung für ein Massendurchfluss-Messgerät**
Oscillating body arrangement for a mass flowmeter
Assemblage d'un corps oscillant pour un débimètre massique

(43) Veröffentlichungstag der Anmeldung: 13.10.1993
(73) Patentinhaber: Endress + Hauser Flowtec AG, CH-4153 Reinach BL 1 (CH)
(72) Erfinder: Abildgaard, Niels, Dk-9670 Loegstoer (DK)
(74) Vertreter: Morstadt, Volker, Dipl.-Ing. c/o Endress + Hauser Flowtec AG

(56) Entgegenhaltungen:
- EP-A- 0 119 354
- FR-A- 2 392 365
- US-A- 3 256 738
- US-A- 4 420 983

## Beschreibung

Die Erfindung betrifft eine Schwingkörperanordnung für ein Massendurchfluß-Meßgerät mit einem nach dem Coriolis-Prinzip arbeitenden, von einem Zu messenden Fluid umströmten Schwingkörper in Form eines einseitig verschlossenen Zylinders.

In der US-A 44 20 983 ist ein Massendurchfluß-Meßgerät mit einem von einem zu messenden Fluid umströmten Schwingkörper in Form eines ein oder beidseitig verschlossenen Zylinders beschrieben, der in den Verlauf einer das Fluid führenden Rohrleitung, von radialen Stegen am oder in der Nähe des verschlossenen Endes gegen die Rohrleitung abgestützt, derart eingesetzt ist, daß die Zylinderachse mit der geraden Rohrleitungsachse zusammenfällt, und mit im Inneren des Zylinders angeordneten piezoelektrischen oder außerhalb der Rohrleitung gegenüber dem Zylinder angeordneten elektrodynamischen Schwingungserregern und -sensoren.

Bei dieser vorbeschriebenen Schwingkörperanordnung hat die Anbringung der Schwingungserreger und -sensoren innerhalb des Zylinders u.a. den Nachteil, daß die Führung und Anordnung von deren Zuleitungen nur schwierig und nicht sehr zuverlässig realisiert werden kann, da sie sowohl auf einem nichtschwingenden als auch auf einem schwingenden Bauteil geführt werden müssen. Auf letzterem müssen sie außerdem schwingungssicher befestigt sein.

Andererseits hat bei der vorbeschriebenen Schwingkörperanordnung die Anbringung der elektrodynamischen Schwingungserreger und -sensoren außerhalb der Rohrleitung zwar diesen Nachteil nicht, jedoch den anderen Nachteil, daß die Schwingungen nicht mit einem möglichst geringen Energieaufwand erregt und die Schwingungssensoren nicht optimal dimensioniert werden können, da der Durchgriff des elektromagnetischen Feldes nur durch die Wand der Rohrleitung hindurch und über den Abstand zwischen Rohrleitung und Zylinder hinweg erfolgen kann, was außerdem die Verwendung von ferromagnetischen Materialen für die Rohrleitung ausschließt.

Die in den Ansprüchen definierte Erfindung dient der Behebung dieser Nachteile durch eine andere konstruktive Ausbildung der Befestigung des Schwingkörpers in der Rohrleitung.

Hierzu besteht die Erfindung nach dem Wortlaut von Anspruch 1 in einer Schwingkörperanordnung für ein Massendurchfluß-Meßgerät mit einem nach dem Coriolis-Prinzip arbeitenden, von einem zu messenden Fluid umströmten Schwingkörper in Form eines mindestens einseitig verschlossenen Zylinders, der in den Verlauf einer das Fluid führenden Rohrleitung am Übergang eines Rohrleitungskrümmers in einen geraden Rohrleitungsteil, durch die Wand des Rohrleitungskrümmers in den geraden Rohrleitungsteil ragend, derart eingesetzt ist, daß die Zylinderachse mit der geraden Rohrleitungsachse zusammenfällt, und mit einem in das Innere des Zylinders beabstandet von dessen Wand eingesetzten und mit dem Zylinder im Bereich von dessen Befestigungsstelle mit der Wand des Rohrleitungskrümmers fixierten Trägerrohr, das als ortsfester Bezugspunkt für mindestens einen an ihm und dem Zylinder angebrachten Schwingungserreger und für an ihm und dem Zylinder angebrachte, axial voneinander beabstandete Schwingungssensoren dient.

Die Erfindung hat u.a. den Vorteil, daß die auf/an dem Zylinder bzw. auf/an dem Trägerrohr angeordneten Teile des/der Schwingungserreger bzw. der Schwingungssensoren so nahe wie möglich (bei gegebener Schwingungsamplitude) einander gegenüberliegend angeordnet werden können und sich somit günstige Energieverhältnisse erzielen lassen.

Ein weiterer Vorteil der Erfindung ist, daß die Zuleitungen im Inneren des ortsfesten Trägerrohrs geführt und von dort durch dessen Durchtrittsöffnung durch die Wand der Rohrleitung problemlos zu einer Erreger- und einer Meßschaltung geführt werden können.

Nach einer Ausgestaltung der Erfindung kann der Schwingkörper durch periodische Verformung seiner lichten Querschnittsfläche zu radialen Umfangsschwingungen bei konstanter Lage seiner Schwerelinie erregt sein.

Die Erfindung wird nun anhand der Figur der Zeichnung näher erläutert, die schematisch im Schnitt ein Ausführungsbeispiel einer Schwingkörperanordnung zeigt.

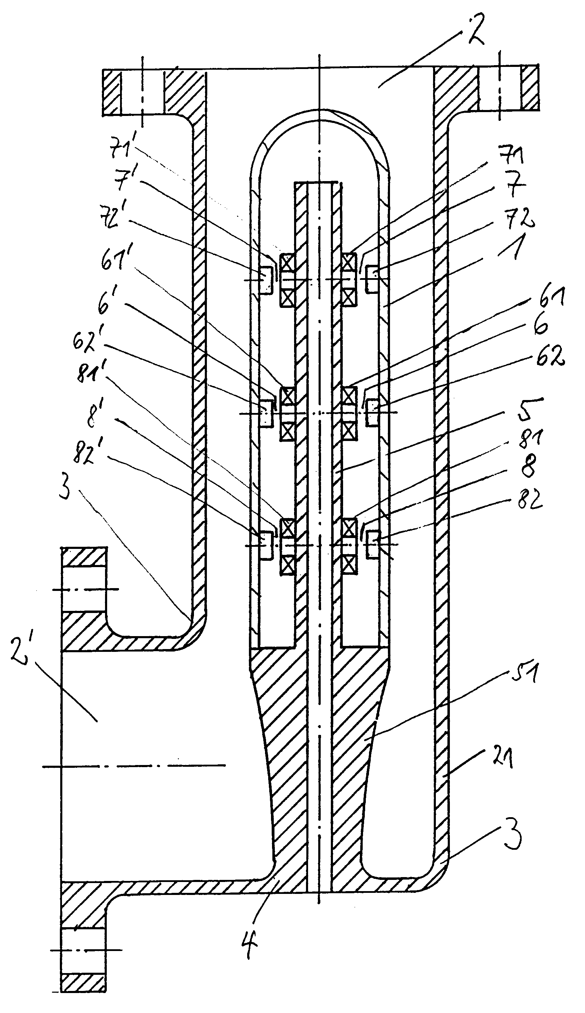

Entsprechend der Figur ist ein von einem zu messenden Fluid umströmter Schwingkörper 1 in Form eines verschlossenen Zylinders vorgesehen, der in den Verlauf einer das Fluid führenden Rohrleitung 2 am Übergang eines Rohrleitungskrümmers 3 in einen geraden Rohrleitungsteil 21 durch die Wand des Rohrleitungskrümmers 3 hindurch in den geraden Rohrleitungsteil 21 hineinragt. Der Schwingkörper 1 ist an dieser Befestigungsstelle 4 derart in die Wand des Rohrleitungskrümmers 3 eingesetzt und dort befestigt, daß die Zylinderachse mit der geraden Rohrleitungsachse zusammenfällt. Der der Befestigungstelle 4 gegenüberliegende Verschluß des Zylinders hat eine strömungstechnisch möglichst günstige Form; in Fig.1 ist dafür der Einfachheit halber die Form einer Halbkugel vorausgesetzt.

Der Rohrleitungskrümmer 3 hat im Ausführungsbeispiel der Figur die Form eines 90°-Winkelstücks, so daß der Schwingkörper 1 in der geraden Wand des linken Rohrleitungsteils 2' befestigt ist. Im Falle eines gebogenen Rohrleitungskrümmers liegt die Befestigungsstelle 4 dann selbstverständlich in dessen gebogenen Teil.

Auch ist die Erfindung nicht auf den Einsatz bei 90°-Winkelstücken beschränkt, da z. B. solche mit einem von 90° abweichenden Winkel oder auch S-förmige Übergangstücke in der unten beschriebenen Weise mit dem Schwingkörper 1 und den dort erläuterten weiteren Teilen versehen werden können.

In das Innere des Schwingkörpers 1 ist mit durchgehendem Abstand von dessen Wand ein Tragerrohr 5 eingesetzt, das mit dem Schwingkörper 1 mindestens im Bereich von dessen Befestigungsstelle 4 mit der Wand des Rohrleitungskrümmers 3 fixiert ist. In der Figur hat diese Fixierungsstelle 51 mit dem Zylinder des Schwingkörpers 1 eine Länge, die etwa gleich dem Durchmesser des linken Rohrleitungsteils 2' ist.

Auf jeden Fall sollte die Fixierungsstelle 51 mechanisch so ausgebildet sein, daß sie einen möglichst guten Schwingungsknoten für die Schwingungen des Schwingkörpers 1 ergibt und daß das Trägerrohr 5 einen ihnen gegenüber ortsfesten Bezugspunkt bildet. Dazu kann es auch vorteilhaft sein, die Wandstärke des Trägerrohrs 5 dicker als die des Schwingkörpers 1 zu machen.

An diametral einander gegenüberliegenden Stellen der Außenseite des Trägerrohrs 5 und ebensolchen Stellen der Innenseite des Schwingkörpers 1, vorzugsweise in der Mitte von dessen schwingfähiger Länge, ist je ein Schwingungserreger 6, 6' angebracht, der im Ausführungsbeispiel der Figur jeweils ein elektrodynamischer ist und aus einer dem Trägerrohr 5 zugeordneten Spule 61 bzw. 61' sowie jeweils aus einem dem Schwingkörper 1 zugeordneten und der Spule 61 bzw 61' gegenüberliegenden Dauermagneten 62 bzw. 62' besteht.

In vergleichbarer Weise sind an Schwingkörper 1 und Trägerrohr 5 axial voneinander beabstandete Schwingungssensoren 7, 8 bzw. 7',8' angebracht, die vorzugsweise denselben Abstand vom Schwingungserreger 6 bzw. 6' haben. Im Ausführungsbeispiel der Figur sind die Schwingungssensoren wiederum elektrodynamische, liegen auf demselben Durchmesser von Schwingkörper und Trägerrohr und bestehen aus letzterem zugeordneten Spulen 71, 81 bzw. 71', 81' sowie aus dem Schwingkörper 1 zugeordneten und den Spulen 71, 81 bzw. 71', 81' gegenüberliegenden Dauermagneten 72, 82 bzw. 72', 82'. Aus Übersichtlichkeitsgründen sind die elektrischen Zuleitungen der Spulen nicht eingezeichnet.

Das Innere des Trägerrohrs 5 kann mit einem geeigneten Kunststoff verfüllt, z.B. ausgeschäumt, werden. Dadurch lassen sich die genannten Zuleitungen verschiebungssicher festlegen.

Der Schwingkörper 1 kann mittels einer üblichen Erregerschaltung (vgl. z.B. die eingangs genannte US-A 44 20 983) zu Schwingungen auf einer seiner mechanischen Resonanzfreguenzen, insb. zu radialen Umfangsschwingungen bei konstanter Lage seiner Schwerelinie durch periodische Verformung seiner lichten Querschnittsfläche angeregt werden. Ferner kann der Massendurchfluß mittels einer üblichen Meßschaltung (vgl. ebenfalls die genannte US-A) aus der Phasendifferenz der von den Schwingungssensoren 7, 8 bzw. 7', 8' abgegebenen Signale bestimmt werden.

## Patentansprüche

1. Schwingkörperanordnung für ein Massendurchfluß-Meßgerät
- mit einem nach dem Coriolis-Prinzip arbeitenden, von einem zu messenden Fluid umströmten Schwingkörper (1) in Form eines mindestens einseitig verschlossenen Zylinders,
-- der in den Verlauf einer das Fluid führenden Rohrleitung (2) am Übergang eines Rohrleitungskrümmers (3) in einen geraden Rohrleitungsteil (21), durch die Wand des Rohrleitungkrümmers (3) in den geraden Rohrleitungsteil (21) ragend, derart eingesetzt und in der Wand befestigt ist,
--- daß die Zylinderachse mit der geraden Rohrleitungsachse zusammenfällt, und
- mit einem in das Innere des Zylinders beabstandet von dessen Wand eingesetzten und mit dem Zylinder im Bereich von dessen Befestigungsstelle (4) mit der Wand des Rohrleitungskrümmers (3) fixierten Trägerrohr (5),
-- das als ortsfester Bezugspunkt für mindestens einen an ihm und dem Zylinder angebrachten Schwingungserreger (6, 6') und für an ihm und dem Zylinder angebrachte, axial voneinander beabstandete Schwingungssensoren (7, 8; 7', 8') dient.

2. Schwingkörperanordnung nach Anspruch 1, bei der der Schwingkörper (1) durch periodische Verformung seiner lichten Querschnittsf1äche zu radialen Umfangsschwingungen bei konstanter Lage seiner Schwerelinie erregt ist.

## Claims

1. A vibrating-body arrangement for a mass flow meter, comprising
- a vibrating body (1) in the form of a cylinder closed at at least one end which works on the Coriolis principle and around which flows a fluid to be metered,
-- said vibrating body (1) being installed in a pipe (2), which conducts the fluid, at the transition of a pipe bend (3) into a straight pipe section (21) so as to extend through the wall of the pipe bend (3) into the straight pipe section (21), and mounted in the wall in such a way
--- that the cylinder axis coincides with the straight pipe axis, and
- a support tube (5) installed in the interior of the cylinder in a spaced relationship from the wall thereof and fixed to the cylinder in the area of the point (4) where the cylinder is fixed to the wall of the pipe bend (3),
-- said support tube (5) serving as a fixed reference point for at least one vibration sensor (6, 6') attached thereto and to the cylinder and for axially spaced-apart vibration sensors (7, 8; 7', 8') attached thereto and to the cylinder.

2. A vibrating-body arrangement as claimed in claim 1 wherein the vibrating body (1) is excited into radial circumferential vibrations by periodic deformation of its clear cross-sectional area, with the position of its centroidal axis remaining constant.

## Revendications

1. Assemblage à corps oscillant pour un débitmètre massique
- équipé d'un corps oscillant (1) fonctionnant selon le principe de Coriolis, entouré d'un liquide à mesurer, se présentant sous la forme d'un cylindre fermé au moins d'un côté,
-- qui est placé sur le trajet d'une conduite (2) véhiculant le fluide à la jonction d'un coude de conduite (3) dans une partie droite de conduite (21), en dépassant à travers la cloison du coude de conduite (3) dans la partie droite de la conduite (21) et est fixé dans le mur
-- de manière que l'axe du cylindre coïncide avec l'axe droit de la conduite,
- et équipé d'un tuyau support (5) inséré à l'intérieur du cylindre à distance de sa cloison et fixé au cylindre dans la zone de son point de fixation (4) avec la paroi du coude de conduite (3),
-- tuyau support qui sert de point de référence fixe pour au moins un générateur d'oscillations (6, 6') fixé sur lui et sur le cylindre, et pour des capteurs d'oscillations (7, 8; 7', 8') fixés sur lui et le cylindre et espacés entre eux sur le même axe.

2. Assemblage à corps oscillant selon la revendication 1 sur lequel le corps oscillant (1) est excité par une déformation périodique de sa surface de section pour avoir des oscillations circonférentielles radiales dans le cas d'une position constante de son axe passant par le centre de gravité.
